# NEUE EUROPÄISCHE PATENTSCHRIFT

(11) **EP 1 270 969 B2**
(45) Veröffentlichungstag und Bekanntmachung des Hinweises auf die Entscheidung über den Einspruch: **20.08.2014**
(45) Hinweis auf die Patenterteilung: 17.10.2007
(21) Anmeldenummer: 01118935.4
(22) Anmeldetag: 04.08.2001
(51) Int. Cl.: F16C 11/06

(54) **Kugelgelenk**
Ball joint
Articulation à rotule

(30) Priorität: 19.06.2001 DE 10130758
(43) Veröffentlichungstag der Anmeldung: 02.01.2003
(73) Patentinhaber: Alfred Heyd GmbH & Co. KG, 74303 Bietigheim-Bissingen (DE)
(72) Erfinder: Heyd, Stefan, 71665 Vaihingen/Enz (DE)
(74) Vertreter: Hössle Patentanwälte Partnerschaft

(56) Entgegenhaltungen:
- DE-A- 19 938 770
- DE-A1- 2 721 159
- DE-B- 1 036 586
- DE-C- 19 638 466
- DE-C2- 4 419 954
- FR-A- 1 364 818
- US-A- 3 269 758
- US-A- 5 851 082
- US-A- 6 030 141
- DIN ISO 12240-1: 'Radial Gelenklager' DEUTSCHE NORM 01 Juli 1999, Seiten 1 - 14
- DIN ISO 6811: 'Gelenklager Begriffe' DEUTSCHE NORM 01 April 2001, Seiten 1,5,11 - 21

## Beschreibung

Die Erfindung betrifft ein Kugelgelenk

Die Druckschrift US 6 030 141 A beschreibt ein Kugelgelenk mit einer kugelringförmigen Lagerfläche eines Gelenkgehäuses, welche an einer als separates Teil im Gelenkgehäuse angeordneten Lagerschale ausgebildet ist. Die Lagerschale weist einen radial nach außen abstehenden Rand auf und endet vor der Durchtrittsöffnung im unteren Teil des Gelenkgehäuses. Die als separates Teil in das Gelenkgehäuse einsetzbaren Lagerschalen können aus jedem geeigneten Material, bspw. gehärtetem Stahl, Kunststoff oder Keramik bestehen.

Kugelgelenke werden in vielen Bereichen der Technik, wie bspw. im Maschinenbau, Kraftfahrzeugwesen oder auch in der Agrartechnik sowie bei Baumaschinen, eingesetzt. Üblicherweise besteht ein Kugelgelenk aus einem Gehäuse, einer darin angeordneten Lagerschale und einem Kugelstück oder einem Kugelzapfen, die in der Lagerschale geführt sind. Es gibt viele verschiedene konstruktive Ausführungen, die ebenso wie die verwendeten Materialien in Abhängigkeit von der Anwendung gewählt werden. Bekannt ist bspw. in einem Gehäuse aus einer Stahl- oder Aluminiumlegierung eine Lagerschale oder mehrere Lagerschalenteile aus einem geeigneten Kunststoff, einem gehärteten Stahlblech oder einem Verbundmaterial vorzusehen.

Bei einem weit verbreiteten Konstruktionsprinzip in der Kraftfahrzeugtechnik ist eine gehärtete Lagerschale aus Stahlblech vorgesehen. In dieser ist das Kugelstück gelagert. Damit das Kugelstück seine gewünschte Lage in der Lagerschale behält, wird es mit einer oberen Lagerschale durch Federkraft in den kugelförmigen Teil der Lagerschale gepreßt.

Nachteilig bei dieser Anordnung ist, daß die Kontaktfläche zwischen Kugel und Lagerschale nur durch die Oberfläche einer Kugelschicht gegeben ist, die die Kugel nicht über den größten Durchmesser, nämlich den Äquator, hinaus umfaßt. Dadurch ist bei gegebener Radialkraft die Flächenpressung an der Kontaktfläche hoch. Darüber hinaus besteht bei einer auftretenden axialen Kraft in Richtung der zylindrisch gestalteten Seite der Lagerschale die Möglichkeit, daß sich ein Kugelzapfen gegen die Federkraft von der Lagerschale abhebt. Dies führt zu einem erhöhten Verschleiß und zu Geräuschen im Gelenk.

Zur Vermeidung der vorstehend genannten Nachteile ist es bekannt, anstelle der Lagerschale einen sogenannten Lagerring zu verwenden, der der Ausführung eines Gelenklagerauβenrings entspricht. Bei einem Kugelgelenk mit Lagerring wird das Kugelstück von dem Lagerring umfaßt. Ist die Kugel des Kugelzapfens oder des Kugelstücks und die Kugellauffläche des Lagerrings genau gefertigt, ergibt sich eine große Kontaktfläche und somit eine geringe Flächenpressung bei gegebener Radialkraft. Auf diese Weise wird der Verschleiß verringert und die mögliche Kraftaufnahme bei gegebener Gelenkgröße erhöht. Durch die Umschließung der Kugel durch den Lagerring ist eine exakte Führung des Kugelstücks gesichert. Das Spiel in axialer und in radialer Richtung ist verringert. Ein Abheben der Kugel aus dem Lagerring ist nicht möglich. Desweiteren können Axialkräfte aufgenommen werden.

Die vorliegende Erfindung ist durch den Anspruch 1 definiert. Eine Ausführungsform ergibt sich durch den abhängigen Anspruch 2.

Das erfindungsgemäße Kugelgelenk weist einen Lagerring auf, in dem ein kugelförmiger Körper geführt ist. Weiterhin ist ein Gehäuse vorgesehen, das den Lagerring umgibt. Der Lagerring ist so ausgebildet, daß dieser den kugelförmigen Körper im Bereich eines Äquators vollständig umschließt und einen ersten inneren Rand und einen zweiten inneren Rand aufweist, die jeweils eine Fläche definieren und die beiden Flächen unterschiedlich dimensioniert sind. Die durch die inneren Ränder definierten Flächen stellen die Kugelaustrittsflächen dar. Der Lagerring ist dabei so ausgebildet, daß die Kugelaustrittsflächen auf beiden Seiten verschieden sind, d.h. der kugelförmige Körper auf einer Seite von der einen Schulter des Lagerrings weiter umschlossen ist als auf der anderen Seite. Der erfindungsgemäße Lagerring weist somit einen asymmetrischen Aufbau bzw. Querschnitt auf. Werkstoff für den Lagerring ist ein Metall, eine Keramik oder eine Legierungsform oder Werkstoffkombination der genannten Werkstoffe. Der Lagerring besteht aus einem oberen und unteren Ringabschnitt, wobei die Fläche des unteren Ringabschnitts, die in Berührung mit dem kugelförmigen Körper unterhalb des Äquators steht, größer als die entsprechende Fläche bei dem oberen Ringabschnitt oberhalb des Äquators ist. Auf das Gehäuse ist ein Verschlußdeckel aufgesetzt, auf den Lagerring ist eine Hülse aufgesetzt. Ein umlaufender Dichtungsbalg und ein Stützring sind vorgesehen.

Durch die Asymmetrie des Lagerrings ergeben sich viele Vorteile. Im Vergleich zu bekannten Lagerringen kann jetzt bei gleicher Gelenkgröße bedingt durch eine größere Kugellauffläche ein größerer Radialdruck aufgenommen werden. Eine größere Kontaktfläche zwischen Kugel und Lagerring reduziert bei gleicher Belastung die Flächenpressung, d.h. der Verschleiß wird geringer und die Lebensdauer wesentlich erhöht. Die größere Umschließung des asymmetrischen Lagerrings minimiert das Axialspiel im Neuzustand als auch in der Verschleißphase. Die mögliche Geräuschentwicklung, bspw. beim Einsatz in einem Kraftfahrzeug bei ungünstiger Fahrbahnbeschaffenheit wird weiter reduziert.

In Richtung der größeren Umschließung der Kugel durch den Lagerring kann auch eine erhöhte Axialkraft aufgenommen werden. Dies ist dort notwendig, wo durch die Einbaulage des Gelenks oder der Lenkstange infolge des Eigengewichts und Schwingungen besonders hohe Axialkräfte auftreten können.

Die erhöhte Belastungsmöglichkeit erlaubt gegebenenfalls bei Platz- und Einbauproblemen die Verwendung der nächst kleineren Gelenkgröße. Eine Überprüfung auf Bauteilfestigkeit ist jedoch, wie dem Fachmann bekannt ist, erforderlich.

Der Grad der Abnutzung an der Kontaktfläche Kugelstück-Lagerung bis zu einem Herausfallen des kugelförmigen Körpers aus dem Lagerring liegt im Vergleich zu einem symmetrischen Ring entscheidend höher.

Der Ausschlagwinkel des kugelförmigen Körpers bleibt bestehen, da dieser durch die Gehäuseform und nicht durch den Lagerring begrenzt wird.

Der asymmetrisch ausgelegte Lagerring kann selbstverständlich auch für Anwendungen außerhalb des Lenkungsbereichs eingesetzt werden, in denen erhöhte axiale Beanspruchungen in einer Richtung auftreten können.

Die Gelenkkugel hat ein geringeres Spiel, wodurch die Abnutzung verringert wird. Eine größere Kontaktfläche ergibt eine verminderte Flächenpressung sowie einen geringeren Verschleiß und eine größere Belastungsaufnahme bei gegebener Gelenkgröße. Bei gleichen Belastungdaten sind daher kleinere und somit kostengünstigere Gelenke einsetzbar.

Der Werkstoff für den Lagerring ist Metall, z.B. Eisenmetall (z.B. Stahl, Eisengußwerkstoff), Nichteisenmetall (z.B. Bronze) oder Keramik. Darüber hinaus sind alle Legierungsformen und Werkstoffkombinationen der genannten Werkstoffe denkbar. Des weiteren umfaßt die Erfindung alle Werkstoffbehandlungen (z.B. Wärmebehandlungen) und Oberflächenbeschichtungen sowie alle Oberflächen-Muster bzw. -Strukturen (z.B. Schmiernutsysteme).

Der erfindungsgemäße Lagerring kann als ein einteiliges Bauteil, das an einer Stelle gesprengt bzw. getrennt ist, ausgeführt sein. Der kugelförmige Körper wird auf der Seite des Lagerrings mit dem größeren Durchmesser durch Aufweiten desselben montiert. Eine gegenseitige Positionierung von mehreren einzelnen Lagerteilen entfällt. Der Lagerring kann auch aus mehreren Teilen bzw. Segmenten aufgebaut sein.

Das erfindungsgemäße Kugelgelenk ist insbesondere für den Einsatz in Spurstangen und Lenkstangen für Fahrzeuge aller Art geeignet.

In einer vorteilhaften Ausgestaltung der Erfindung ist der kugelförmige Körper Teil eines Kugelzapfens. Der Kugelzapfen weist dabei einen kugelförmigen Körper mit einem angeformten Zapfen auf, der aus dem Gelenklager herausragt. Erfindungsgemäß wird mittels einer Hülse und eines aufgesetzten Verschlußdeckels der Lagerring fixiert und das Gehäuse geschlossen.

Auf der Gegenseite, der Austrittsseite des Kugelzapfens ist ein Stützring vorgespannt auf den Gegenkonus bzw. Kugelzapfenhals geschoben. Anschließend wird der Dichtungsbalg montiert.

Das Gelenk ist vorzugsweise mit Spezialfett gefüllt und dadurch geschmiert. In Ausgestaltung der Erfindung können auf der Innenseite bzw. der Kugellauffläche des Lagerrings Schmiernuten vorgesehen sein.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung dargestellt und wird im folgenden unter Bezugnahme auf die Zeichnung näher erläutert.
- Figur 1: zeigt eine bevorzugte Ausführungsform eines erfindungsgemäßen Kugelgelenks in perspektivischer Ansicht.
- Figur 2: zeigt die bevorzugte Ausführungsform aus Figur 1 in Draufsicht.
- Figur 3: zeigt die bevorzugte Ausführungsform aus Figur 1 in einer Schnittdarstellung.
- Figur 4: zeigt einen Ausschnitt aus Figur 3 in vergrößerter Darstellung.
- Figur 5: zeigt einen Lagerring in perspektivischer Ansicht.
- Figur 6: zeigt die Ausführungsform aus Figur 5 im Querschnitt.
- Figur 7: zeigt die Ausführungsform aus Figur 5 in einer Schnittdarstellung.
- Figur 8: zeigt ein Gelenklager in perspektivischer Ansicht.
- Figur 9: zeigt die Ausführungsform aus Figur 8 in einer Schnittdarstellung.

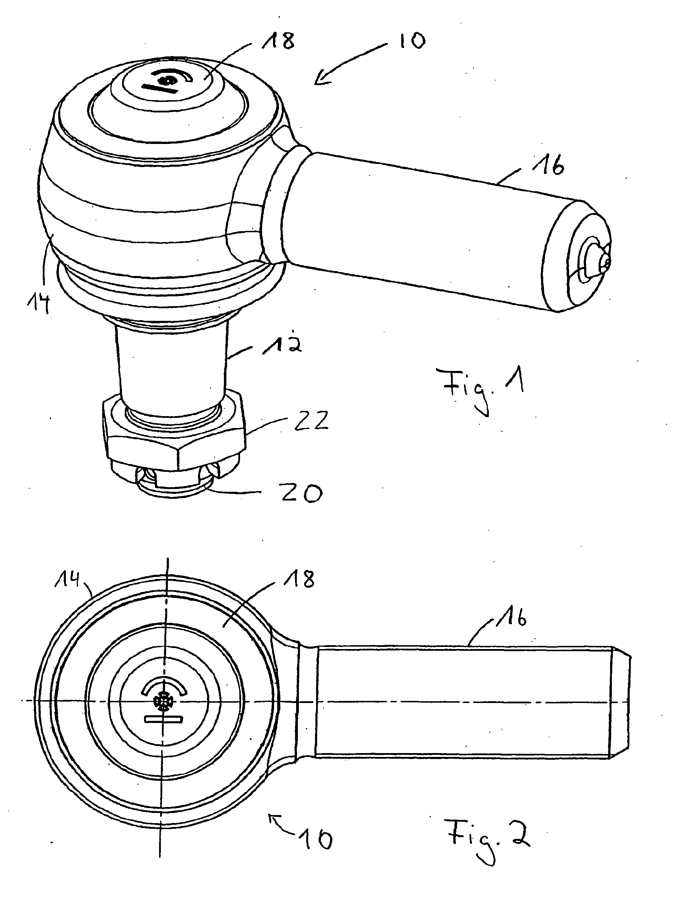

Figur 1 zeigt ein erfindungsgemäßes Kugelgelenk, insgesamt mit der Bezugsziffer 10 bezeichnet, in schematischer Darstellung. Zu erkennen ist ein Kugelzapfen 12, der in einem in dieser Darstellung nicht zu erkennenden Lagerring geführt ist. Dieser Lagerring ist von einem Gehäuse 14 umgeben. An dem Gehäuse 14 angeformt ist ein Anschlußstück 16. Auf das Gehäuse 14 aufgesetzt befindet sich ein Verschlußdeckel 18, der das Gehäuse 14 im oberen Bereich abschließt. Im unteren Bereich des Gehäuses 14 ragt der Kugelzapfen 12 aus diesem.

Am unteren Ende des Kugelzapfens 12 ist ein Gewinde 20 angeformt. Auf dieses Gewinde 20 ist eine Schraubenmutter 22 aufgedreht.

In Figur 2 ist das erfindungsgemäße Kugelgelenk 10 in Draufsicht dargestellt. Der Verschlußdeckel 18 ist auf das Gehäuse 14 des Kugelgelenks 10 aufgesetzt und verhindert, daß Fremdkörper und Spritzwasser in das Gehäuse 14 des Kugelgelenks 10 gelangen. An das Gehäuse 14 angeformt ist das längliche Anschlußstück 16.

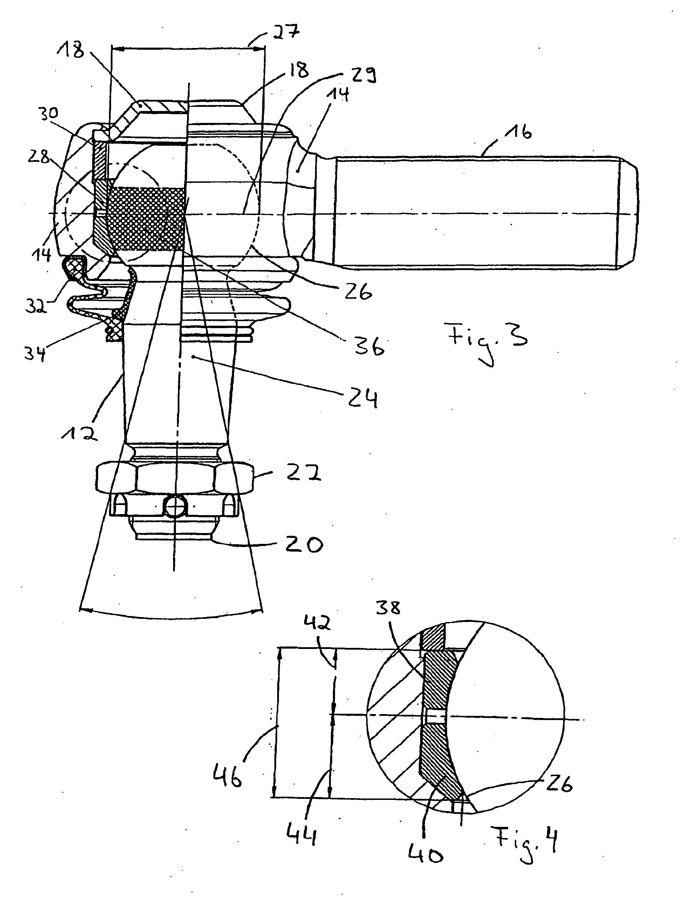

In Figur 3 ist das erfindungsgemäße Kugelgelenk 10 in einer Schnittdarstellung gezeigt. Der Darstellung ist zu entnehmen, daß der Kugelzapfen 12 aus einem Zapfenteil 24 und einem Kugelteil 26 besteht. Pfeil 27 gibt den Durchmesser des Kugelteils 26 im Bereich dessen größten Umfangs wieder.

Der Kugelteil 26 ist in einem Lagerring 28 geführt. Dabei ist der Kugelteil im Bereich des größten Umfangs, nämlich im Bereich des Äquators 29, vollständig vom Lagerring 28 umschlossen.

Der Kugelteil 26 ist im Lagerring 28 eingeschnappt und bildet mit diesem zusammen ein Gelenklager, das im Gehäuse 14 aufgenommen ist. Eine Hülse 30 ist ebenfalls im Gehäuse vorgesehen und dient zur Fixierung des Lagerring 28 in dem Gehäuse 14. Das Gelenklager kann in allen möglichen Konstruktionen zur Anwendung kommen.

Der Verschlußdeckel 18 sitzt auf der Hülse 30, die wiederum auf dem Lagerring 28 angeordnet ist. Weiterhin ist ein umlaufender Dichtungsbalg 32 und ein Stützring 34 vorgesehen. Der mit der Bezugsziffer 36 bezeichnete Ausschnitt ist in Figur 4 in vergrößerter Darstellung gezeigt.

Figur 4 zeigt den Lagerring 28, der aus einem oberen Ringabschnitt 38 und einem unteren Ringabschnitt 40 besteht. Zu erkennen ist, daß der untere Ringabschnitt 40 weit nach unten gezogen ist. Der untere Ringabschnitt 40 weist somit eine größere vertikale Ausdehnung als der obere Ringabschnitt 38 auf, wie dies durch Pfeile 42 und 44 verdeutlicht ist. Die gesamt vertikale Ausdehnung des Lagerrings 28 ist mit Pfeil 46 veranschaulicht.

Bedingt durch die besondere Ausgestaltung des Lagerrings 28 ist die Fläche des unteren Ringabschnitts 40, die in Berührung mit dem Kugelteil 26 steht, größer als die entsprechende Fläche bei dem oberen Ringabschnitt 38.

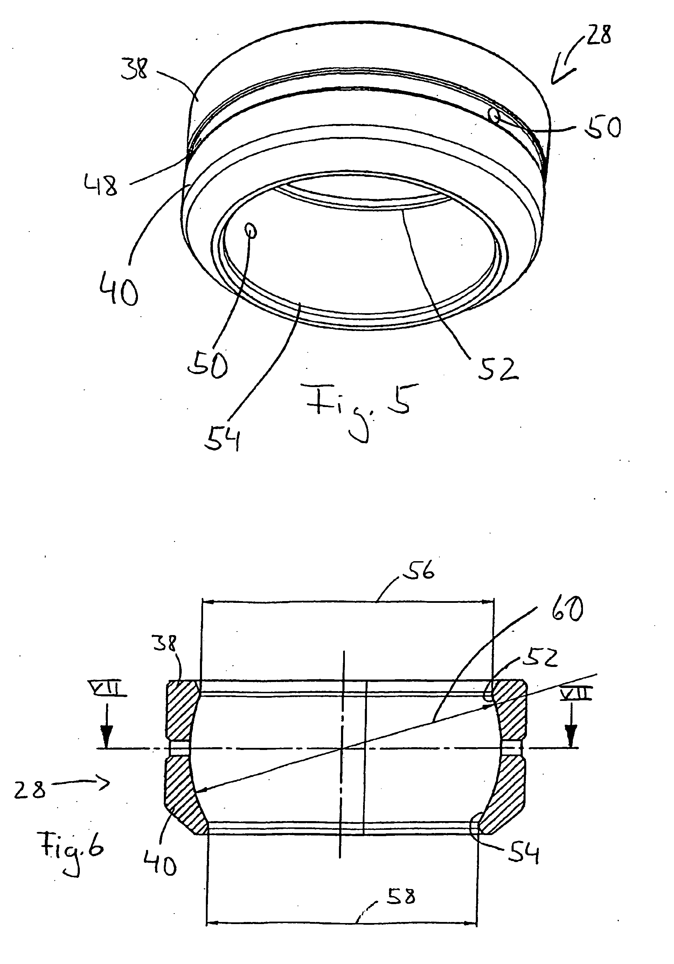

In Figur 5 ist der Lagerring 28 in perspektivischer Ansicht gezeigt. Auch in dieser Darstellung ist der obere Ringabschnitt 38 und der untere Ringabschnitt 40 zu erkennen. Zwischen dem oberen Ringabschnitt 38 und dem unteren Ringabschnitt 40 ist in dem Lagerring 28 eine Nut 48 ausgebildet. Weiterhin befinden sich in dem Lagerring 28 im Bereich der Nut 48 zwei sich gegenüberliegende Öffnungen 50 für eine evtl. notwendige Nachschmiermöglichkeit. Der dargestellte Lagerring 28 kann somit in einem abschmierbaren aber auch in einem wartungsfreien Gelenklager eingesetzt werden.

Im oberen Bereich des Lagerrings 28 weist dieser einen ersten inneren Rand 52 auf, der in diesem Fall eine Fläche mit einem kreisförmigen Umfang definiert. Dieser Umfang bestimmt den Innendurchmesser des Lagerrings 28 in dessen oberen Bereich. Im unteren Bereich des Lagerrings 28 ist ein zweiter innerer Rand 54 vorgesehen, der ebenfalls einen kreisförmigen Umfang bildet. Der Durchmesser dieses Umfangs ist gleich dem Innendurchmesser des Lagerrings 28 in dessen unterem Bereich.

In Figur 6 ist der Lagerring 28 im Querschnitt gezeigt. Deutlich ist zu erkennen, daß der untere Ringabschnitt 40 weiter in den Innenraum des Lagerrings 28 ragt als der obere Ringabschnitt 38. Der erste innere Rand 52 des Lagerrings 28, nämlich der obere innere Rand des oberen Ringabschnitts 38 bildet einen kreisförmigen Umfang. Der Durchmesser dieses Umfangs ist durch Pfeil 56 gegeben. Entsprechend bildet der untere innere Rand des unteren Ringabschnitts 40, nämlich der zweite innere Rand 54, ebenfalls einen kreisförmigen Umfang. Der Durchmesser dieses Umfangs ist durch Pfeil 58 verdeutlicht und signifikant kleiner als der Durchmesser des zuvor benannten Umfangs. Die durch die inneren Ränder 52 und 54 definierten Flächen sind somit unterschiedlich dimensioniert. Diese müssen nicht kreisförmig sein. Ebenso müssen die Flächen nicht eben sein.

Der Durchmesser des kugelförmigen Körpers, der in dem Lagerring 28 geführt und in dieser Darstellung nicht gezeigt ist, ist mit Pfeil 60 veranschaulicht.

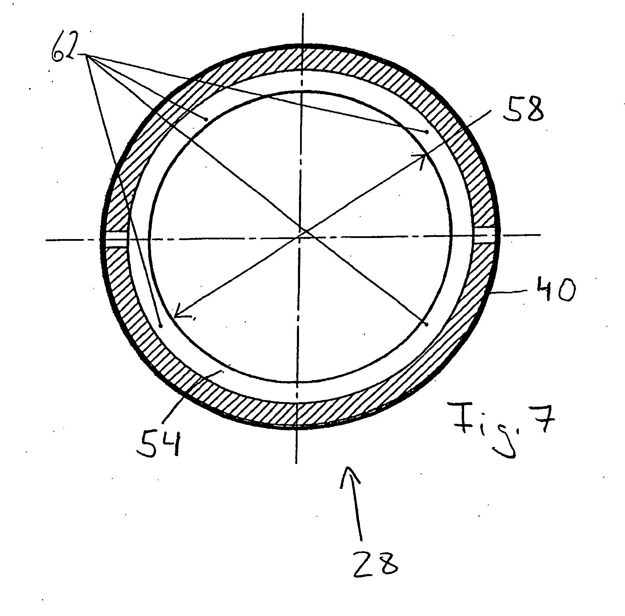

Einen Schnitt durch den Lagerring 28 entlang der Linie VII - VII in Figur 6 ist in Figur 7 gezeigt. In dieser ist der Lagerring 28, insbesondere dessen unterer Ringabschnitt 40, gezeigt.

Die mit der Bezugsziffer 62 bezeichnete Fläche, nämlich die innere Oberfläche des unteren Ringabschnitts 40, stellt einen Teil der Kugellauffläche dar. Die Kugellauffläche ist die Fläche, die mit der Oberfläche der Kugel in Berührung steht.

Aufgrund der besonderen Ausgestaltung des Lagerrings 28, d.h. dessen asymmetrischen Aufbaus, ist diese Kugellauffläche gegenüber derjenigen herkömmlicher Lagerringe erheblich vergrößert.

Deutlich zu erkennen ist ebenfalls der durch den Pfeil 58 bezeichnete Durchmesser des inneren Randes 54, der bei der hier gezeigten Ausführungsform einen kreisförmigen Umfang bildet.

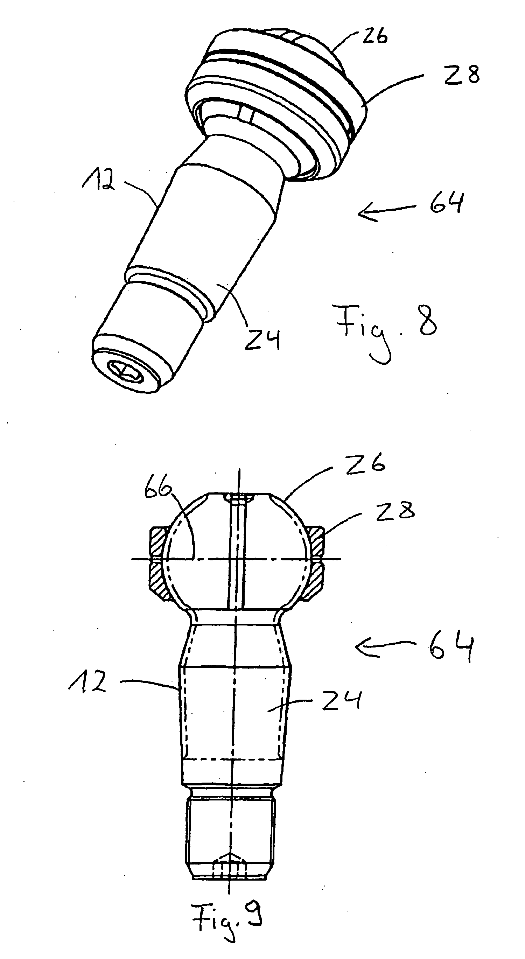

In Figur 8 ist ein Gelenklager gezeigt, welches mit der Bezugsziffer 64 bezeichnet ist. Zu erkennen ist der Kugelzapfen 12 und der Lagerring 28. Der Kugelteil 26 des Kugelzapfens 12 ist in dem Lagerring 28 geführt. Der Zapfenteil 24 des Kugelzapfens 12 ragt aus dem Lagerring 28 heraus.

Das Gelenklager 64 ist in Figur 9 in einer Schnittdarstellung gezeigt. Zu erkennen ist, wie der Kugelteil 26 in dem Lagerring 28 geführt ist. Dabei ist der Kugelteil im Bereich des Äquators 66, d.h. im Bereich des größten Umfangs des Kugelteils 26, vollständig vom Lagerring 28 umschlossen.

## Patentansprüche

1. Kugelgelenk mit einem Lagerring (28), in dem ein kugelförmiger Körper geführt ist, und mit einem Gehäuse (14), das den Lagerring (28) umgibt, wobei der Lagerring (28) so ausgebildet ist, daß dieser den kugelförmigen Körper im Bereich eines Äquators (29, 66) vollständig umschließt und einen ersten inneren Rand (52) und einen zweiten inneren Rand (54) aufweist, die jeweils eine Fläche definieren, die unterschiedlich dimensioniert sind, wobei der Werkstoff für den Lagerring (28) ein Metall, eine Keramik oder eine Legierungsform oder Werkstoffkombination der genannten Werkstoffe ist, wobei
die durch die inneren Ränder (52, 54) definierten Flächen Kugelaustrittsflächen des kugelförmigen Körpers darstellen wobei der Lagerring (28) aus einem oberen (38) und unteren Ringabschnitt (40) besteht, wobei die Fläche des unteren Ringabschnitts (40), die in Berührung mit dem kugelförmigen Körper unterhalb des Äquators (29, 60) steht, größer als die entsprechende Fläche bei dem oberen Ringabschnitt (38) oberhalb des Äquators (29, 66) ist,
bei dem auf das Gehäuse (14) ein Verschlußdeckel (18) aufgesetzt ist,
bei dem auf den Lagerring (28) eine Hülse (30) aufgesetzt ist,
bei dem ein umlaufender Dichtungsbalg (32) und ein Stützring (34) vorgesehen sind.

2. Kugelgelenk nach Anspruch 1, bei dem der kugelförmige Körper Teil eines Kugelzapfens (12) ist.

## Claims

1. A ball joint with a bearing ring (28) in which a ball-shaped member is guided, and with a housing (14) which surrounds the bearing ring (28), the bearing ring (28) being configured such that it completely surrounds the ball-shaped member in the region of an equator (29, 66) and has a first inner edge (52) and a second inner edge (54), each defining a surface of different dimensions, while the material used for the bearing ring (28) may be a metal, a ceramic or an alloyed form or combination of the specified materials , wherein
the surfaces defined by the inner edges (52, 54) constitute ball exit surfaces of the ball-shaped member, wherein the bearing ring (28) is composed of an upper (38) and a lower ring portion (40), wherein the surface of the lower ring portion (40) in contact with the ball-shaped member below the equator (29, 60) is larger than the corresponding surface at the upper ring portion (38) above the equator (29, 66),
in which a closing cover (18) is placed onto the housing (14),
in which a sleeve (30) is placed onto the bearing ring (28),
in which an encircling sealing bellows (32) and a support ring (34) are provided.

2. The ball joint according to claim 1, in which the ball-shaped member is a part of a ball pin (12).

## Revendications

1. Articulation à rotule comprenant une bague de palier (28) dans laquelle est guidé un corps de forme sphérique, et comprenant un boîtier (14) qui entoure la bague de palier (28), ladite bague de palier (28) étant ainsi réalisée que celle-ci enferme entièrement le corps de forme sphérique dans la zone d'un équateur (29, 66) et comporte une première bordure intérieure (52) et une seconde bordure intérieure (54) qui définissent chacune une surface, lesquelles sont des dimensions différentes, et le matériau pour la bague de palier (28) est un métal, une céramique ou une forme d'alliage ou une combinaison de matériaux des matières précitées,
dans laquelle les surfaces définies par les bordures intérieures (52, 54) représentent des surfaces de sortie du corps de forme sphérique, ladite bague de palier (28) étant constituée d'un tronçon de bague supérieur (38) et d'un tronçon de bague inférieur (40), tels que la surface du tronçon de bague inférieur (40), qui vient en contact avec le corps de forme sphérique au-dessous de l'équateur (29, 60), est plus grande que la surface correspondante dans le tronçon de bague supérieur (38) au-dessus de l'équateur (29, 66),
dans laquelle un couvercle de fermeture (18) est posé sur le boîtier (14),
dans laquelle une douille (30) est posée sur la bague de palier (28), et
dans laquelle sont prévus un soufflet d'étanchement périphérique (32) et une bague de soutien (34).

2. Articulation à rotule selon la revendication 1, dans laquelle le corps de forme sphérique fait partie d'un tourillon sphérique (12).
